**Europäisches Patentamt**

**European Patent Office**

**Office européen des brevets**

(19)

(11) Veröffentlichungsnummer: **0 184 704**
**B1**

(12) **EUROPÄISCHE PATENTSCHRIFT**

(45) Veröffentlichungstag der Patentschrift:
16.03.88

(51) Int. Cl.⁴: **B 64 C 13/50**

(21) Anmeldenummer: **85114861.9**

(22) Anmeldetag: **22.11.85**

(54) **Ruderantrieb.**

(30) Priorität: **24.11.84 DE 3442899**

(43) Veröffentlichungstag der Anmeldung:
**18.06.86 Patentblatt 86/25**

(45) Bekanntmachung des Hinweises auf die Patenterteilung:
**16.03.88 Patentblatt 88/11**

(84) Benannte Vertragsstaaten:
**FR**

(56) Entgegenhaltungen:
**FR-A-857 515**

(73) Patentinhaber: **DORNIER SYSTEM GmbH, Postfach 1360, D-7990 Friedrichshafen (DE)**

(72) Erfinder: **Einhart, Johann, Untere Dohle 17, D-7772 Uhldingen- Mühlhofen (DE)**
Erfinder: **Kunz, Wunnibald, Ifenstrasse 4, D-7990 Friedrichshafen 1 (DE)**
Erfinder: **Metzger, Klaus, Saarstrasse 18, D-7415 Wannweil (DE)**

(74) Vertreter: **Landsmann, Ralf, Dipl.- Ing., Kleeweg 3, D-7990 Friedrichshafen 1 (DE)**

EP 0 184 704 B1

## Beschreibung

Die Erfindung betrifft einen Ruderantrieb für einen unbemannten Flugkörper nach dem Oberbegriff des Anspruchs 1.

Bekannt sind Antriebe, bei denen ein Elektromotor eine Schraubenspindel dreht, auf der eine Mutter sitzt, die drehbar mit einem Ruderhebel verbunden ist. Der Ausgleich zwischen Linearbewegung der Mutter und Kreisbahn des Ruderhebelauges erfolgt durch ein längeres Gestänge, durch eine drehbewegliche Lagerung des Motors oder durch eine Langlochbefestigung am Ruderhebel.

Ein solcher Ruderantrieb ist der FR-PS 857515 zu entnehmen, bei dem ein starr mit einem Flugzeug verbundener Elektromotor über eine Schraubenspindel, eine durch diese verschiebbare Mutter und einen an der Mutter angelenkten, im wesentlichen parallel zur Schraubenspindel verlaufenden Zwischenlenker einen Ruderhebel bewegt. Der Zwischenlenker ist relativ lang.

Die bekannten Lösungen weisen entweder relativ viel Spiel auf (Langloch), haben einen hohen Platzbedarf (langer Hebel), oder haben relativ große bewegte Massen und eine große Distanz zwischen hinterem Motoraufhängepunkt und Ruderhebeldrehachse (bewegter Motor). In engen hochbeschleunigenden Flugkörpern ist aber ein exakt arbeitender, kompakter Ruderantrieb mit kleinen bewegten Massen notwendig.

Aufgabe der Erfindung ist es daher, für die Ruder eines unbemannten Flugkörpers einen Ruderantrieb zu schaffen, der mit wenig Spiel arbeitet, geringe Abmessungen und eine geringe Distanz zwischen dem Montageflansch des Motors und der Ruderhebeldrehachse hat und bei dem der Antriebsmotor starr eingebaut ist.

Diese Aufgabe wird erfindungsgemäß gelöst von einem Ruderantrieb mit den im Anspruch 1 genannten Merkmalen.

Ausführungen der Erfindung sind Gegenstände von Unteransprüchen.

Der erfindungsgemässe Ruderantrieb weist einen starr eingebauten Motor auf und hat damit nur sehr kleine bewegte Massen, was hohe Beschleunigungen (aktiv für Ruderbewegungen und Passiv für die Belastbarkeit der ganzen Anlage) zulässt.

Der erfindungsgemässe Zwischenlenker mit Bügel verhindert ein Verdrehen der Mutter und sorgt dadurch für eine exakte, spielarme Kraftübertragung und für eine sehr kurze und schmale Bauweise. Vorteilhaft ist, wenn der Zwischenlenker kurz ist. Der erfindungsgemässe Ruderantrieb kann auch in sehr kleinen Flugkörpern eingebaut werden.

Eine vorteilhafte Ausführung mit zwei gegenüberliegenden Anlenkpunkten an der Mutter und einem bogenförmigen zweiarmigen Kniehebel als Zwischenlenker erhöht die Stellgenauigkeit und verhindert ein Verdrehen der Mutter. Durch Verwendung eines V- oder U-förmigen, die Mutter umfassenden Ruderhebels ist es möglich, den Motor sehr nahe an die Ruderachse zu legen, wodurch die Baulänge und die Breite nochmals reduziert werden können.

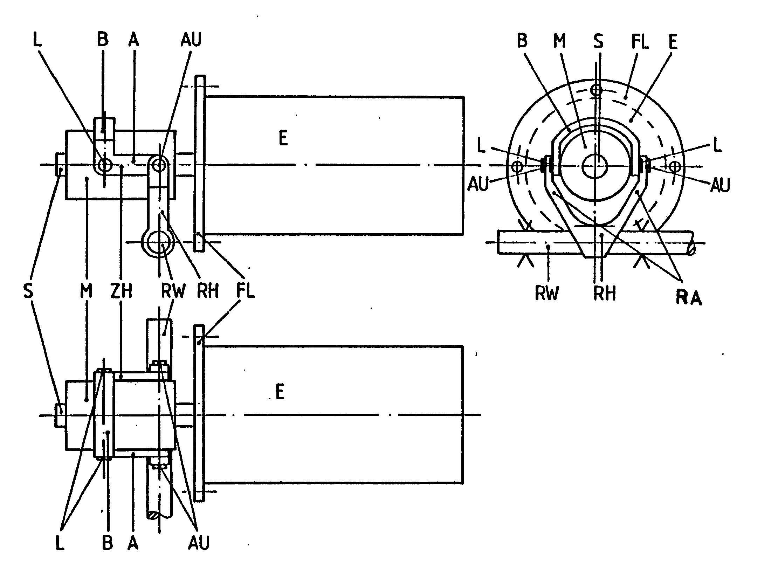

Die Erfindung wird anhand einer Figur näher erläutert: Die Figur zeigt einen erfindungsgemässen Ruderantrieb in drei Ansichten.

Die Figur zeigt einen Ruderantrieb, wie er z. B. in einer Rakete oder einer Drohne eingebaut sein kann. Nicht gezeigt ist die Ruderfläche auf der Ruderwelle RW. Für jede Ruderwelle RW ist ein eigener Elektromotor (Stellmotor) E vorgesehen - hier mit dem Motorflansch FL zur Befestigung. Auf der Welle des Motors sitzt eine Schraubenspindel S. Auf der Schraubenspindel S befindet sich eine Mutter M. An zwei sich gegenüberliegenden Aussenseiten der Mutter M ist je ein Lager L für den Zwischenlenker ZH befestigt, der in der gezeigten Ausführung aus einem Bügel B und zwei senkrecht dazu verlaufenden Armen A besteht. Die Arme A führen zu dem Ruderhebel RH, der starr auf der Ruderwelle RW sitzt.

Soll ein Ruder verstellt werden, so wird der Läufer des Elektromotors E in Bewegung versetzt und verdreht die Schraubenspindel S. Dabei bewegt sich die Mutter M axial nach links oder rechts und nimmt den Zwischenlenker ZH mit. Dessen Arme A nehmen den Ruderhebel RH nach links oder nach rechts mit und verdrehen die Ruderwelle RW um den gewünschten Winkel. Der Zwischenlenker ZH gleicht durch Verkippen um die durch die Lager L führende Achse die Winkelabweichung zwischen Linearbewegung der Mutter M und Kreisbewegung des Auges AU des Ruderhebels RH aus.

Die Verdrehung der Mutter M wird durch die zweiarmige Ausführung, von Ruderhebel RH und Zwissenlenker ZH sowie durch die Verbindung der Arme A des Zwischenlenkers ZH durch den Bügel B verhindert. Der Bügel B kann einen beliebigen Winkel mit den Armen A bilden, bevorzugt sind jedoch 90°. Zu erkennen ist die sehr geringe Baulänge des Ruderantriebs und der erfindungsgemäß erreichte geringe Abstand zwischen Motorflansch FL und Ruderwelle RW.

## Patentansprüche

1. Ruderantrieb für einen unbemannten Flugkörper, bei dem ein starr mit diesem verbundener Elektromotor (E) über eine Schraubenspindel (S), eine durch diese verschiebbare Mutter (M) und einen an der Mutter (M) angelenkten, im wesentlichen parallel zur Schraubenspindel (S) verlaufenden Zwischenlenker (ZH) einen ein- oder mehrarmigen Ruderhebel (RH) bewegt, dadurch gekennzeichnet, daß das oder die an der Mutter (M) angelenkte(n) Ende(n) (L) des Zwischenlenkers (ZH) weiter vom Elektromotor (E) entfernt ist (sind) als das oder die ruderhebelseitige(n) Ende(n) (Augen AU) des Zwischenlenkers (ZH).

2. Ruderantrieb nach Anspruch 1, dadurch gekennzeichnet, dass

- die Mutter (M) zwei sich gegenüberliegende Lager (L) aufweist,
- der Zwischenlenker (ZH) aus zwei Armen (A) besteht, die mit einem um die Mutter (M) führenden Bügel B verbunden sind und
- der Ruderhebel (RH) zwei in einer Ebene liegende Arme (RA) aufweist.

3. Ruderantrieb nach Anspruch 2, dadurch gekennzeichnet, dass die Arme (RA) des Ruderhebels (RH) V- oder U-Form aufweisen.

## Claims

1. Rudder actuator for a missile, wherein an electro motor (E) rotates an one- or two-armed lever (RH) by means of a spindel (S), a nut (M) and an intermediate lever (ZH), the intermediate lever (ZH) being aligned essentially parallel to the spindel (S), characterised in that the extremity (-ies) (L) of the intermediate lever (ZH) hinged to the nut (M) is (are) more distant from the electromotor (E) as the extremitiy (-ies) (AU) hinged to the lever (RH).

2. Rudder actuator as in claim 1, characterised in that

- the nut (M) has two opposite bearings (L)
- the intermediate lever (ZH) has two arms (A), connected with each other by a bow (B) and
- the lever (RH) has two arms (RA), arranged in one plane.

3. Rudder actuator as in claim 2, wherein the arms (RA) of the lever (RH) are V-shaped or U-shaped.

## Revendications

1. - Commande de gouverne pour un engin volant sans pilote dans laquelle un moteur électrique (E) solidaire de l'engin déplace, par l'intermédiaire d'une broche filetée (S), d'un écrou (M) pouvant être déplacé par celle-ci et d'une bielle intermédiaire (ZH) articulée sur l'écrou (M) et s'étendant essentiellement parallèlement à la broche fileté (S), un levier de gouverne (RH) à un ou plusieurs bras, caractérisée en ce que l'extrémité ou les extrémités (L) de la bielle intermédiaire (ZH) articulée(s) sur l'écrou (M) est (sont) plus éloignée(s) du moteur électrique (E) que l'extrémité ou les extrémités côté levier de gouverne (oeils AU) de la bielle intermédiaire (ZH).

2. - Commande de gouverne selon la revendication 1, caractérisée en ce que

- l'écrou (M) présente deux paliers (L) diamétralement opposés,
- la bielle intermédiaire (ZH) se compose de deux bras (A) qui sont reliés à un étrier (B) entourant l'écrou (M, et
- que le levier de gouverne (RH) comporte deux bras (RA) situés sur le même plan.

3. - Commande de gouverne selon la revendication 2, caractérisée en ce que les bras (RA) du levier de gouverne (RH) présentent une forme en V ou en U.